# FASCICULE DE BREVET EUROPEEN

(11) **EP 0 522 905 B1**
(45) Date de publication et mention de la délivrance du brevet: **24.01.1996**
(21) Numéro de dépôt: 92401720.5
(22) Date de dépôt: 19.06.1992
(51) Int. Cl.: B01J 8/08, C10G 35/12

(54) **Procédé et dispositif pour le remplacement en continu du catalyseur dans une unité à lit mobile**
Verfahren und Apparat zur kontinuierlichen Erneuerung der Katalysatormasse in einem Fliessbett
Process and device for the continuous replacement of the catalyst mass in a moving bed unit

(30) Priorité: 10.07.1991 FR 9108680
(43) Date de publication de la demande: 13.01.1993
(73) Titulaire: TOTAL RAFFINAGE DISTRIBUTION S.A., F-92800 Puteaux (FR)
(72) Inventeur: Herrenschmidt, Patrice, F-78230 Le Pecq (FR); Cormerais, François-Xavier, F-76290 Fontaine la Mallet (FR); Patureaux, Thierry, F-76290 Fontaine la Mallet (FR)
(74) Mandataire: Jolly, Jean-Pierre

(56) Documents cités:
- EP-A- 0 308 027
- US-A- 3 850 582

## Description

La présente invention concerne un procédé et un dispositif pour le remplacement par un second catalyseur d'un premier catalyseur d'un réacteur fonctionnant en lit mobile dans un dispositif de traitement d'hydrocarbures. L'invention a plus particulièrement pour objet un procédé de ce type qui peut être mis en oeuvre sans interruption du processus et sans arrêt du dispositif d'hydrotraitement d'hydrocarbures.

On sait que, dans de très nombreux procédés de traitement d'hydrocarbures - reformage, craquage, isomérisation, hydrotraitement de résidus, etc...-, la charge d'hydrocarbures est convertie par mise en contact, dans un réacteur, avec des particules catalytiques. La plupart des unités de traitement sont en lit fixe (voir "Catalytic Reforming", par Donald M. Little, PenWell Books).

Au cours de la réaction catalytique, du coke et divers produits hydrocarbonés se déposent sur les particules et les désactivent. On doit alors les régénérer à l'aide d'un courant de gaz porteur contenant généralement de l'oxygène, pour assurer la combustion du coke et des autres produits déposés sur le catalyseur.

Cette opération peut être réalisée in ou ex-situ, avec arrêt de l'unité.

L'intérêt des procédés à régénération continue, connus sous le nom de procédés à lit mobile, est de permettre de ne pas arrêter l'unité de production et de régénérer le catalyseur usé, par prélèvement en aval du réacteur, pour le réinjecter, après traitement régénératif, dans une zone de réaction ad hoc couplée au réacteur.

Cependant, même avec les unités de type régénératif, le catalyseur s'use progressivement. Il convient donc de remplacer périodiquement le catalyseur usé par un catalyseur neuf.

C'est lors du changement de ce catalyseur (dénommé ci-après premier catalyseur), pour le remplacer par un nouveau catalyseur, soit de même type, soit de type différent, (dénommé ci-après second catalyseur), que l'opération en continu présente des difficultés, lorsque l'on ne souhaite pas interrompre la production de l'unité de traitement d'hydrocarbures.

En particulier, il est délicat de connaître le moment exact où il faut arrêter l'introduction du second catalyseur en étant certain, d'une part, que le premier catalyseur a bien été totalement évacué et sans qu'il y ait, d'autre part, un excès de second catalyseur introduit en amont du réacteur. Cette difficulté est en partie due au phénomène de mélange des deux catalyseurs, surtout au niveau des parois.

En effet, en l'absence de toute mesure précise des quantités de catalyseur à soutirer et de catalyseur de remplacement à introduire, on charge habituellement dans le réacteur, dans un souci de sécurité, une quantité de catalyseur neuf largement supérieure à celle qui serait normalement nécessaire. Il en résulte un surcoût de la charge de catalyseur, une perte correspondante d'une partie du catalyseur nouveau qui sera retraité comme s'il avait été usé, et une augmentation de la durée de l'étape de remplacement, ce qui pénalise économiquement la production.

Par ailleurs, lorsqu'on utilise un dispositif à plusieurs réacteurs disposés en parallèle, couplés séparément à un seul régénérateur et pouvant être utilisés simultanément en continu, le remplacement du catalyseur s'avère très difficile à effectuer avec le synchronisme souhaitable, et les opérations de changement dans l'un des réacteurs peuvent être terminées alors qu'elles sont en cours dans les autres. Dans ce cas, la marge de sécurité deviendra prohibitive pour le raffineur. De plus, le mélange des grains des catalyseurs ancien et nouveau peut s'avérer très hétérogène, en particulier au niveau des parois.

L'invention vise à remédier à ces inconvénients.

Un premier but de l'invention est donc de proposer un procédé de remplacement en continu du catalyseur dans une unité à lit mobile du type décrit ci-dessus, qui ne nécessite pas d'arrêt de l'unité.

Un autre but de l'invention est de proposer un procédé de ce type qui permette d'introduire avec précision dans l'unité la seule quantité désirée du catalyseur de remplacement.

L'invention a également pour but de proposer un procédé de ce type qui se prête au remplacement simultané et synchronisé du catalyseur dans plusieurs réacteurs utilisés en parallèle dans la même installation de traitement.

Un autre but de l'invention est de proposer un procédé de ce type qui puisse facilement être mis en oeuvre sur les installations existantes de traitement d'hydrocarbures en continu et, en particulier, dans les installations de reformage catalytique de type régénératif ou d'hydrotraitement de résidus de distillation sous vide.

L'invention a enfin pour but de proposer des moyens simples, rapides et peu coûteux, pour la mise en oeuvre d'un tel procédé.

A cet effet, l'invention a pour objet un procédé de remplacement par un second catalyseur d'un premier catalyseur à l'état solide, circulant dans un dispositif de traitement d'hydrocarbures comprenant au moins un réacteur de traitement dans lequel le catalyseur est présent en lit mobile, ce procédé étant caractérisé en ce que, sans interrompre le fonctionnement du réacteur de traitement :
- on soutire le premier catalyseur en aval du ou de chaque réacteur, dans le sens de circulation du catalyseur;
- on injecte simultanément le second catalyseur, en amont du ou de chaque réacteur, avec un débit volumétrique d'injection au plus égal au débit volumétrique de soutirage du premier catalyseur, l'introduction du second catalyseur étant éventuellement précédée de l'injection d'une masse d'un tiers corps solide de densité de chargement différente, servant de marqueur, dans le cas où le premier et le second catalyseurs présentent des densités de chargement sensiblement égales ;
- on mesure en continu la densité de chargement du matériau soutiré en aval du ou de chaque réacteur ;
- et l'on interrompt le soutirage du premier catalyseur et l'injection du second catalyseur dans le réacteur concerné lorsque la densité de chargement ainsi mesurée est égale à celle du second catalyseur.

Il est clair, en effet, que, lorsque la densité de chargement (en anglais, "bulk density") du catalyseur soutiré en aval du réacteur est égale à celle du second catalyseur, ceci signifie que sensiblement la totalité du premier catalyseur en circulation que l'on désire remplacer a été retirée du circuit, de même que, éventuellement, la totalité du tiers corps solide, qui n'intervient que comme un marqueur entre le premier et le second catalyseurs.

Dans le cas où le premier et le second catalyseurs ont des densités de chargement sensiblement égales, le tiers corps solide injecté avant le second catalyseur en amont du réacteur servira simplement de marqueur, son soutirage en aval du réacteur traduisant simplement le fait que sensiblement toute la masse du premier catalyseur a déjà été soutirée. La quantité de tiers corps solide utilisée pourra donc être très faible et représentera, en général, entre 1 et 2% en poids de la masse du catalyseur à remplacer.

Si le deuxième catalyseur a une densité de chargement différente de celle du premier catalyseur d'au moins 1%, de préférence de 2,5 à 25%, en enregistrant en continu ou en discontinu sur un graphique les densités de chargement mesurées en fonction du temps, on relèvera d'abord une portion de ligne droite, parallèle à l'axe des abscisses, cette ligne droite correspondant à la densité du premier catalyseur. Une partie de courbe inclinée traduira ensuite le remplacement progressif du premier catalyseur par le second catalyseur, jusqu'à une seconde ligne droite, correspondant à la densité de chargement du second catalyseur et traduisant un soutirage de ce seul second catalyseur au point de soutirage.

Si, par contre, les densités de chargement des deux catalyseurs sont voisines, il faudra utiliser un tiers corps de densité de chargement significativement différente, servant de marqueur, pour établir la distinction entre les deux catalyseurs au niveau du point de soutirage. Le graphique représentant les variations de masse spécifique en fonction du temps comprendra alors une partie parallèle à l'axe des abscisses et correspondant à la densité de chargement du premier catalyseur soutiré, puis un pic correspondant au soutirage du tiers corps solide et, enfin, une partie de droite parallèle à l'axe des abscisses, correspondant à la densité de chargement du second catalyseur et traduisant le seul soutirage de celui-ci.

Naturellement, dans le cas où l'on utilisera un tiers corps solide, il faudra que les dimensions des particules de celui-ci soient sensiblement égales à celles des catalyseurs, afin de pas perturber le régime du dispositif de circulation.

Lorsque l'installation de traitement d'hydrocarbures comporte plusieurs réacteurs en parallèle, dans lesquels on désire remplacer simultanément le catalyseur utilisé, il est souhaitable de s'assurer du synchronisme des opérations de soutirage et de remplissage des réacteurs, afin qu'elles s'achèvent en même temps pour l'ensemble des réacteurs. Dans ce but, on comparera, en continu ou en discontinu, les densités de chargement des matériaux soutirés simultanément en aval de chacun des réacteurs et l'on adaptera le débit d'alimentation de ces réacteurs en second catalyseur et le débit de soutirage du premier catalyseur de manière à maintenir sensiblement égales les densités de chargement mesurées.

L'invention a également pour objet un dispositif pour le remplacement par un second catalyseur d'un premier catalyseur circulant dans un dispositif de traitement d'hydrocarbures comprenant au moins un réacteur dans lequel le catalyseur est présent en lit mobile, ce dispositif comprenant, en aval du réacteur dans le sens de circulation de catalyseur, un moyen de soutirage du premier catalyseur et, en amont du réacteur, un moyen d'injection du second catalyseur ou d'un tiers corps solide, ce dispositif étant caractérisé en ce qu'il comporte un moyen de mesure de la densité de chargement du matériau soutiré par le moyen de soutirage.

Avantageusement, le moyen de mesure de la densité de chargement du matériau soutiré comprendra des moyens d'enregistrement sous la forme d'un graphique de l'évolution de cette densité en fonction du temps.

Dans le cas où l'installation de traitement des hydrocarbures comporte plusieurs réacteurs en parallèle, dans lesquels on désire remplacer simultanément le catalyseur utilisé, le dispositif conforme à l'invention comprendra, de préférence, un moyen de comparaison des densités de chargement des matériaux soutirés en aval de chacun des réacteurs et des moyens de commande du débit d'alimentation de chacun des réacteurs en catalyseur de remplacement et du débit de soutirage du catalyseur à remplacer, ces moyens de commande étant asservis au moyen de comparaison de façon à maintenir sensiblement égales les densités de chargement mesurées des matériaux soutirés.

On notera que le procédé conforme à l'invention s'applique également à des dispositifs d'hydrotraitement de résidus de distillation sous vide. Dans de tels dispositifs, le catalyseur circule lentement en permanence du haut en bas du réacteur, avec soutirage du catalyseur usé en aval du réacteur et ajout simultané du catalyseur neuf en amont de celui-ci. La vitesse de circulation du catalyseur est lente, et est fonction, d'une part, du niveau d'activité catalytique recherché, et, d'autre part, du niveau d'empoisonnement du catalyseur, en particulier par les métaux de type nickel et vanadium.

Dans ce type de procédé, le catalyseur n'est pas régénéré en continu dans la même unité, mais le procédé conforme à l'invention permet de résoudre les problèmes qui se posent lorsque, lors d'une chute de l'activité catalytique, il est nécessaire de changer rapidement l'ensemble du lit catalytique autrement qu'en arrêtant la production et en vidant à l'arrêt l'ensemble du lit catalytique, puis en redémarrant l'unité.

L'invention va maintenant être décrite plus en détail en référence aux dessins annexés, sur lesquels :
La figure 1 est un schéma de principe illustrant le circuit de circulation du catalyseur dans une installation de traitement d'hydrocarbures comprenant un unique réacteur et un unique régénérateur et équipé d'un dispositif de remplacement de catalyseur conforme à l'invention ;
Les figures 2 et 3 sont des schémas illustrant la variation en fonction du temps t de la densité de chargement d du matériau soutiré en aval du réacteur, respectivement dans le cas où le catalyseur à remplacer et le catalyseur de remplacement ont des densités de chargement nettement différentes et dans le cas où ces densités de chargement sont voisines et où l'on emploie un tiers corps solide ;
La figure 4 est un schéma analogue à celui de la figure 1, dans le cas d'une installation comprenant plusieurs réacteurs.

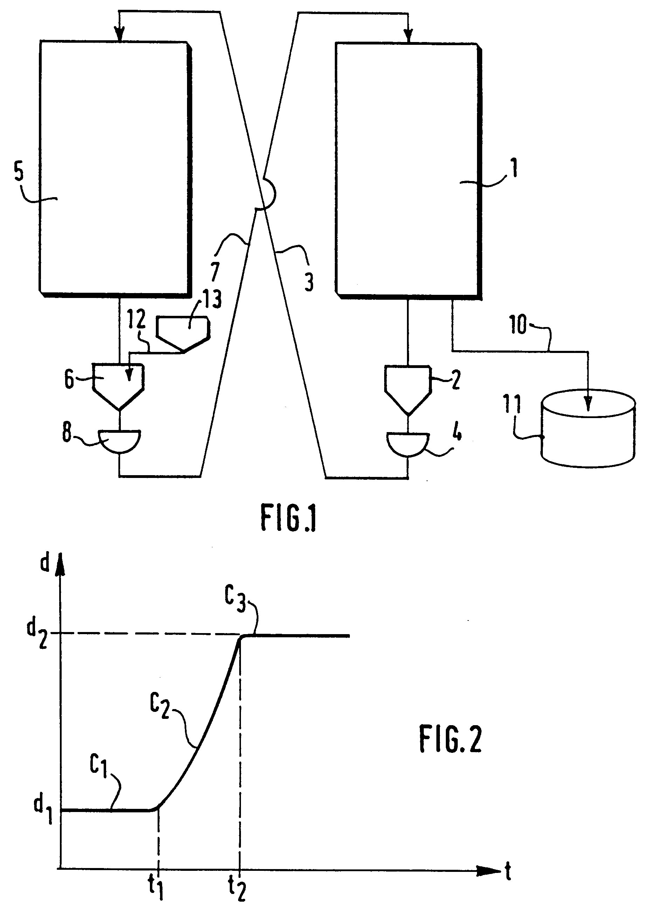

Le circuit de circulation du catalyseur représenté sur la figure 1 comprend un unique réacteur 1 de traitement d'hydrocarbures, contenant un catalyseur en lit mobile. Les lignes d'admission de la charge à traiter et de l'hydrogène et les lignes d'évacuation des produits de la conversion n'ont pas été représentées. Le catalyseur désactivé, recouvert d'un dépôt de coke et de produits hydrocarbonés, est évacué par gravité à la base du réacteur 1 dans une trémie tampon 2, d'où il est transféré par la ligne 3, en suspension dans un gaz vecteur provenant du compresseur 4, jusqu'à la partie supérieure d'un régénérateur 5. A la base de ce régénérateur est injecté de l'air ou de l'oxygène, par une ligne non représentée, et les produits déposés sur les sites actifs du catalyseur sont ainsi éliminés par combustion. Le catalyseur régénéré est évacué par gravité à la base du régénérateur 5 dans une trémie tampon 6, d'où il est recyclé par la ligne 7 en suspension dans un gaz vecteur provenant du compresseur 8, jusqu'à la partie supérieure du réacteur 1.

Pour plus d'informations sur de tels circuits de circulation du catalyseur, dans des installations de réformage catalytique de charges d'hydrocarbures, on pourra se reporter à l'ouvrage précité, "Catalytic Reforming", de Donald M. Little, PennWell Books, pages 153 et suivantes. Pour la notion de lit mobile, on pourra se référer à l'ouvrage de S. TRAMBOUZE, H. VAN LANDEGHEM et J-P WAUQUIER, "Les Réacteurs Chimiques", pages 10, 398-400 et 432-446.

Lorsque l'on désire remplacer le catalyseur circulant dans le circuit décrit ci-dessus par un second catalyseur de densité de chargement différente, conformément à la présente invention, on soutire en continu le catalyseur usé à remplacer, ou premier catalyseur, à la base du réacteur 1 ou du régénérateur, sans interrompre le fonctionnement de l'installation de production, et on l'évacue par la ligne 10, vers un élément de stockage 11, tandis que, simultanément, on introduit par la ligne 12, à la partie supérieure du réacteur 1, ou à la sortie du régénérateur, à partir d'une trémie 13, le catalyseur de remplacement ou second catalyseur.

On mesure, en continu ou en discontinu, la densité de chargement du catalyseur soutiré par la ligne 10 et l'on reporte cette densité de chargement d en fonction du temps t sur un graphique tel que celui de la figure 2, qui se rapporte au cas où le premier catalyseur, à remplacer, a une masse spécifique inférieure à celle du second catalyseur, ou catalyseur de remplacement.

Comme représenté sur cette figure 2, la portion de courbe C₁ que l'on enregistre d'abord est sensiblement parallèle à l'axe des abscisses, ce qui signifie que la densité de chargement d₁ du catalyseur soutiré est constante et correspond à celle du premier catalyseur. Au bout d'un temps t₁, la densité de chargement mesurée commence à augmenter (portion C₂ de la courbe enregistrée), ce qui signifie que le catalyseur soutiré est constitué d'un mélange du premier et du second catalyseurs. La densité de chargement mesurée continue à augmenter jusqu'à un temps t₂, où elle redevient constante et égale à la masse spécifique d₂ du second catalyseur (portion C₃ de la courbe enregistrée). Le second catalyseur est donc le seul à être soutiré, ce qui signifie qu'il n'y a pratiquement plus de premier catalyseur dans le circuit. On peut alors arrêter les opérations de soutirage du premier catalyseur et d'introduction dans le réacteur du second catalyseur.

Ces opérations n'ont que peu perturbé le fonctionnement de l'installation de traitement, qui, à aucun moment, n'a été arrêtée, et elles n'ont duré que le temps strictement nécessaire au remplacement du premier catalyseur par la quantité adéquate du second catalyseur, mesurée avec précision.

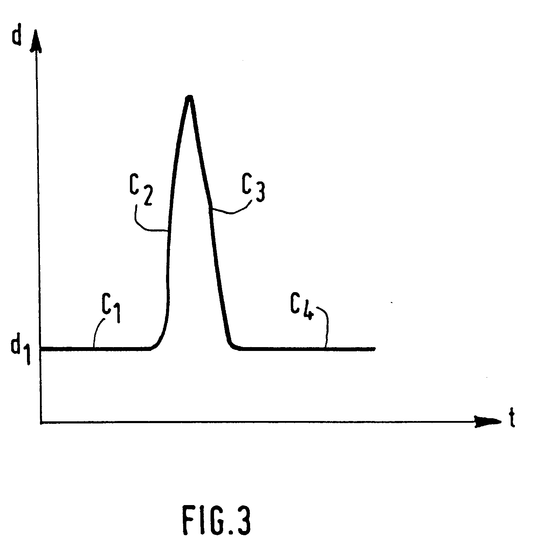

Si le premier et le second catalyseurs ont des densités de chargement voisines ou même identiques (cas où le premier et le second catalyseurs sont deux lots d'un même catalyseur), on utilisera un procédé analogue, mais en commençant par introduire dans le réacteur 1, par la ligne 12, avant le second catalyseur, un tiers corps solide de densité de chargement significativement différente de celle du premier et du second catalyseurs (supérieure à celles-ci dans le cas de la figure 3), qui sert de marqueur.

Dans ce cas, comme on le voit sur la figure 3, la portion de courbe C₁ d'abord enregistrée sera sensiblement parallèle à l'axe des abscisses et correspondra à la densité apparente d₁ du premier catalyseur. Cette portion de courbe C₁, est suivie d'un pic dont la partie ascendante C₂ traduit le soutirage d'un mélange du premier catalyseur et du tiers corps solide, tandis que la partie descendante C₃ correspond au soutirage d'un mélange de ce tiers corps solide et du second catalyseur. La portion de courbe C₄ qui suit, sensiblement parallèle à l'axe des abscisses et située dans le prolongement de la portion de courbe C₁, correspond ensuite au soutirage du second catalyseur. Comme on l'a indiqué ci-dessus, la quantité du tiers corps solide utilisée pourra être très faible, puisqu'il sert simplement de marqueur, et elle sera généralement de l'ordre de 1 à 2% en poids du premier catalyseur à remplacer.

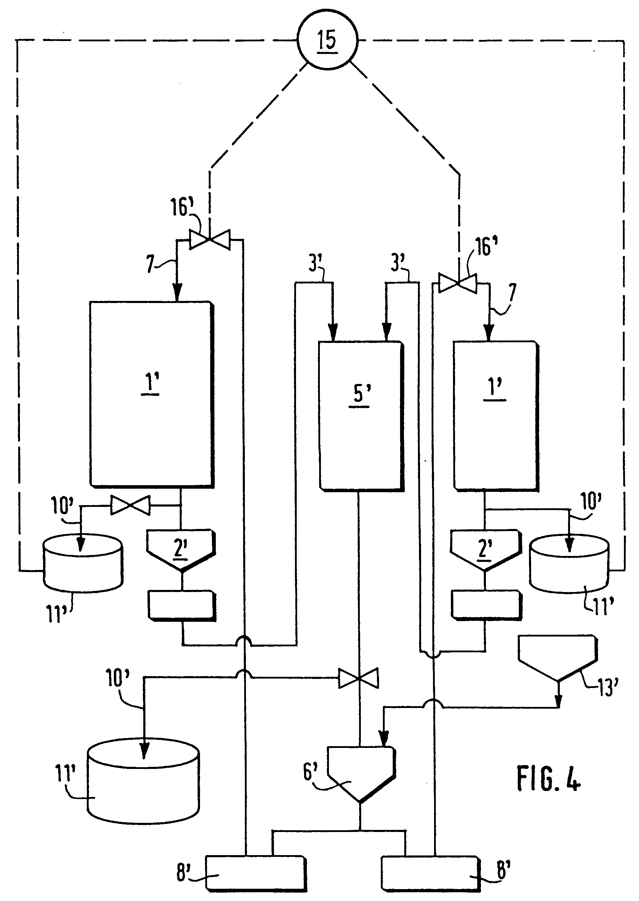

La transposition du procédé selon l'invention à une installation de traitement d'hydrocarbures comprenant plusieurs réacteurs est aisée pour l'homme de l'art, comme on le voit sur la figure 4, sur laquelle les organes déjà décrits sont désignés par les mêmes chiffres de référence que sur la figure 1, affectés de l'indice ′.

Dans le cas de cette mise en oeuvre, les réacteurs 1′ sont au nombre de deux. En vue de synchroniser le remplissage des deux réacteurs en nouveau catalyseur à partir de la trémie 13′, ainsi que le soutirage des deux réacteurs, par les lignes 10′, du catalyseur à remplacer, les masses spécifiques des matériaux soutirés à la base des deux réacteurs 1′ seront comparées dans un comparateur 15′, qui commande des vannes 16′ disposées sur les lignes 7′ d'alimentation des réacteurs 1′ en nouveau catalyseur, de manière à régler en continu le débit d'alimentation de ces catalyseurs de façon telle que la densité de chargement des matériaux soutirés en 10′, à la base des deux réacteurs, soit sensiblement la même.

Les exemples qui suivent illustrent la mise en oeuvre de l'invention.

### EXEMPLE 1

Dans cet exemple, l'unité de traitement d'hydrocarbures est une unité de reformage catalytique du type régénératrice, à deux réacteurs et à un régénérateur, analogue à l'unité de la figure 4.

Pendant la phase de remplacement en continu du premier catalyseur de cette unité par un second catalyseur de densité de chargement supérieure à celle du premier, le catalyseur est prélevé en 11′, à la base des deux réacteurs 1′ et du régénérateur 5′, le catalyseur est éliminé en 11′ à la base du régénérateur 5′ et le second catalyseur est introduit en 13′ en amont des réacteurs.

Les prélèvements de catalyseurs soutirés pour analyses varient au cours du processus de remplacement du second catalyseur :
- en aval des réacteurs 1′, en 11′, au début du soutirage;
- puis, en aval des réacteurs 1′, en 11′, et en aval du régénérateur 5′ ;
- enfin, en fin d'opération, en aval du régénérateur 5′ seulement.

La fréquence des prélèvements varie selon les phases, de toutes les quatre heures, avant l'opération de remplacement, à toutes les heures, juste avant et pendant l'opération de remplacement.

Au début du processus, le premier catalyseur, de densité de chargement d' environ 0,57 g/cm³, est éliminé en aval du régénérateur avec un débit d'environ 0,452 tonne/heure et, simultanément, le second catalyseur de densité d2 plus élevée (0,65g/cm³) est introduit en amont des deux réacteurs 1′ avec un débit d'environ 0,515 tonne/heure. La production de l'unité n'est ni interrompue, ni modifiée, les paramètres de vitesse spatiale horaire de la charge, de température et de pression étant pratiquement inchangées par rapport à ceux d'une production normale sans changement de catalyseur.

Simultanément, les prélèvements d'échantillon sont effectués régulièrement et leur densité est déterminée de manière connue en soi.

Les densités de chargement mesurées aux différents points de prélèvement en fonction du temps sont rassemblées ci-après dans le Tableau 1. Le remplacement du catalyseur commence le Jour 1 à 8 heures du matin et il est interrompu le Jour 4 à 11 heures du matin.

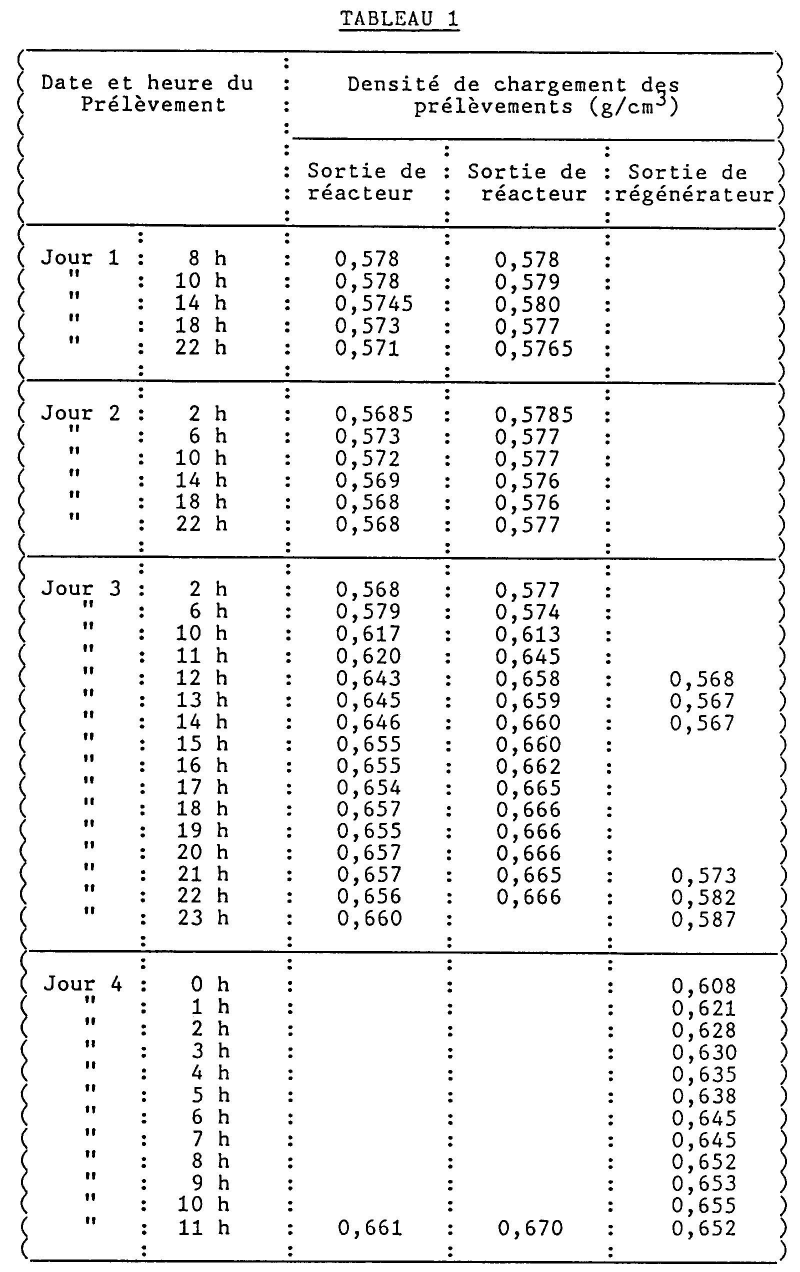

Le Jour 4 à 11 heures, on arrête simultanément le soutirage du catalyseur, l'ajout du nouveau catalyseur et les prélèvements pour analyses.

L'opération a duré 4 jours et 11 heures sans que la production ait jamais été arrêtée.

Sans les moyens de l'invention, l'arrêt de production aurait été de 9 jours, compte tenu des procédures d'arrêt, de déchargement, de chargement et de réglage des conditions de température et de débit, dans le cas de l'unité de reformage catalytique exemplifiée.

Avec le procédé conforme à l'invention, moins de 2% du premier catalyseur subsistent dans l'unité de remplacement et 104% du second catalyseur ont été introduits.

Sans les moyens de l'invention, on ajouterait normalement 123% de second catalyseur, pour être certain de changer totalement de catalyseur.

La même opération peut être réalisée bien évidemment lorsque la densité de chargement du second catalyseur est inférieure à la densité de chargement du premier catalyseur à changer et la procédure à mettre en oeuvre est identique en tout point.

### EXEMPLE 2

Dans une unité de reformage catalytique régénératif à l'échelle pilote, on effectue en continu le remplacement du catalyseur ancien présent dans l'unité par un nouveau lot du même catalyseur. Ce remplacement est nécessaire, car on observe, malgré la régénération continue du catalyseur, une baisse de qualité des produits (indice d'octane, en particulier), malgré des augmentations succesives de la température de réaction.

La densité de chargement du premier catalyseur est légèrement supérieure à celle du nouveau lot de remplacement, à cause de l'attrition progressive subie par le catalyseur calciné dans ce type de procédé. Mais, dans ce cas, l'attrition n'a pas conduit à une dégradation du catalyseur telle que la densité de chargement du nouveau lot de catalyseur soit suffisamment élevée pour déceler la fin de l'opération de remplacement avec précision.

Le procédé de remplacement du premier catalyseur, en marche productive normale, utilise la mesure de la densité apparente de chargement faite avec un tiers corps.

Les caractéristiques des catalyseurs anciens et nouveaux et du tiers corps solide (de l'alumine) sont données dans le Tableau 2 ci-après.

**TABLEAU 2**

| | Ancien catalyseur | Tiers corps | Nouveau catalyseur |
|---|---|---|---|
| Densité de chargement (g/cm³) | 0,68 | 0,75 | 0,65 |
| Granulométrie(mm) | 1,7 | 2 | 2 |

Au début du processus de changement de catalyseur, on introduit dans le circuit, en amont du réacteur et en aval du régénérateur, 0,5kg d'alumine commerciale, dont les caractéristiques nécessaires à l'invention sont données dans le Tableau 2. Cette alumine a sensiblement la même granulométrie que le catalyseur employé.

La méthode utilisée pour mesurer la densité de chargement est identique à celle utilisée dans l'exemple 1.

Dans cet exemple, la précision de la mesure de la densité de chargement, d = 0,65 g/cm³, est de ± 0,004.

Le tiers corps qui est utilisé dans cet exemple est de l'alumine. Il peut également être un autre catalyseur de réformage catalytique de granulométrie équivalente et dont la densité de chargement est supérieure de 1% de celle du catalyseur à remplacer, ou un autre lot du même catalyseur ou encore un autre catalyseur de densité de chargement identique.

### EXEMPLE 3

Dans une unité d'hydrotraitement de résidus de distillation sous vide (procédé type HYVAHL-Technical Symposium Aostra Decembre 1986), un appoint régulier de catalyseur neuf quotidien d'environ 5 tonnes/jour, soit 0,7% de la totalité du catalyseur du réacteur, est nécessaire. Cet appoint permet de maintenir l'activité du réacteur au niveau recherché.

La densité de chargement du catalyseur usé, en marche productive normale, est de 0,78 g/cm³. Le catalyseur neuf d'appoint a une densité de chargement de 0,6 g/cm³. Le nouveau catalyseur avec lequel on souhaite remplacer l'ancien a une densité de chargement de 0,55 g/cm³.

Au début de l'opération de chargement en continu du second catalyseur, l'appoint quotidien est interrompu.

Le second catalyseur est envoyé dans le circuit en amont du réacteur avec un débit de 1200 tonnes/heure.

Les caractéristiques des catalyseurs à leur différents stade sont données dans le Tableau 3.

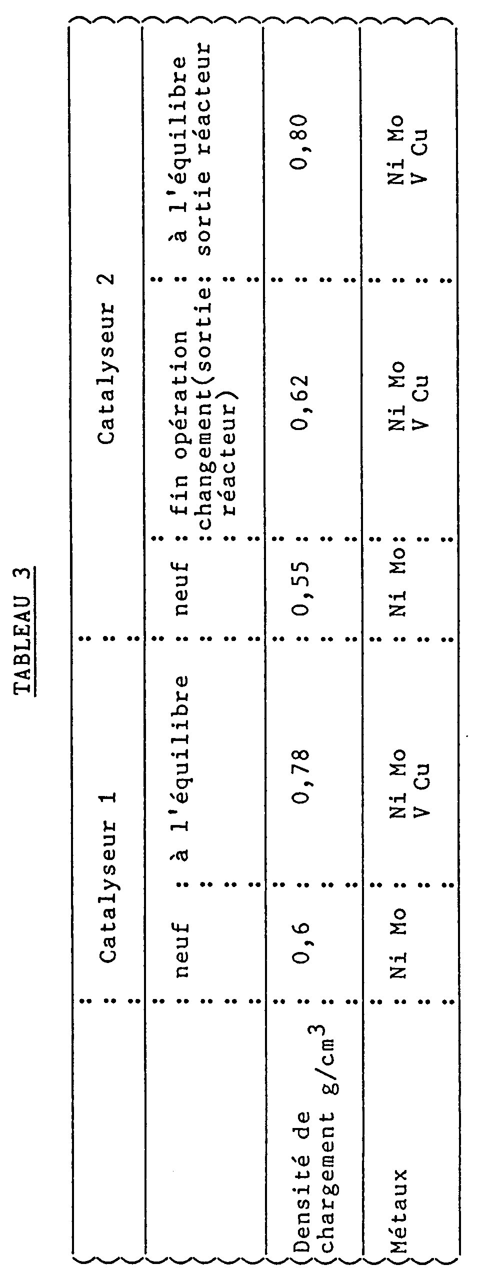

Le procédé conforme à l'invention présente donc d'importants avantages. Il ne nécessite pas l'arrêt de l'installation d'hydrotraitement à laquelle il s'applique et ne perturbe pratiquement pas le fonctionnement de cette installation. Il permet en outre de remplir avec précision de la quantité désirée de catalyseur le ou les réacteurs de cette installation. Il s'applique enfin aux installations déjà existantes et ne nécessite pour sa mise en oeuvre que des moyens simples et peu coûteux.

## Revendications

1. Procédé de remplacement par un second catalyseur d'un premier catalyseur à l'état solide circulant dans un dispositif de traitement d'hydrocarbures comprenant au moins un réacteur (1) de traitement, dans lequel le catalyseur est présent en lit mobile, ce procédé étant caractérisé en ce que, sans interrompre le fonctionnement du réacteur de traitement :
- on soutire le premier catalyseur en aval du ou de chaque réacteur (1) dans le sens de circulation du catalyseur ;
- on injecte simultanément le second catalyseur en amont du ou de chaque réacteur, avec un débit volumétrique d'injection au plus égal au débit volumétrique de soutirage du premier catalyseur, l'introduction du second catalyseur étant éventuellement précédée de l'injection d'une masse d'un tiers corps solide de densité de chargement différente, servant de marqueur, dans le cas où le premier et le second catalyseurs ont des densités de chargement sensiblement égales ;
- on mesure en continu la densité de chargement du matériau soutiré en aval du ou de chaque réacteur ;
- et l'on interrompt le soutirage du premier catalyseur et l'injection du second catalyseur dans le réacteur concerné lorsque la densité de chargement ainsi mesurée est égale à celle du second catalyseur.

2. Procédé selon la revendication 1, caractérisé en ce que le second catalyseur ou éventuellement le tiers corps utilisé, présente avec le premier catalyseur une différence de densité de chargement supérieure à 1%, de préférence 2,5 à 25%.

3. Procédé selon la revendication 1, appliqué à une installation de traitement d'hydrocarbures comprenant plusieurs réacteurs (1′) dans lesquels on souhaite remplacer simultanément et de façon synchronisée un premier catalyseur par un second catalyseur, caractérisé en ce que l'on compare les densités de chargement des matériaux soutirés simultanément en aval de chacun des réacteurs (1′) et en ce que l'on commande le débit d'alimentation en second catalyseur de chacun de ces réacteurs et le débit de soutirage de chacun d'entre eux de manière à maintenir sensiblement égales les densités mesurées.

4. Procédé selon la revendication 1, appliqué au cas où le premier et le second catalyseurs ont des densités de chargement sensiblement égales, caractérisé en ce que le volume de tiers corps solide injecté représente entre environ 1 et 2% en poids de celui du premier catalyseur.

5. Procédé selon l'une des revendications 1 et 2, caractérisé en ce que l'on matérialise par un graphique les variations en fonction du temps de la densité de chargement du matériau soutiré du réacteur (1).

6. Dispositif pour le remplacement par un second catalyseur d'un premier catalyseur à l'état solide, circulant dans une unité de traitement d'hydrocarbures comprenant au moins un réacteur (1) dans lequel le catalyseur est présent en lit mobile, ce dispositif comprenant, en aval du réacteur dans le sens de circulation du catalyseur, un moyen de soutirage (10,11) du premier catalyseur et, en amont du réacteur, un moyen d'injection (12,13) du second catalyseur ou d'un tiers corps solide, ce dispositif étant caractérisé en ce qu'il comporte un moyen de mesure de la densité de chargement du matériau soutiré par le moyen de soutirage.

7. Dispositif selon la revendication 6, pour le remplacement simultané et synchronisé d'un premier catalyseur par un second catalyseur, dans une pluralité de réacteurs (1′) d'une même installation de traitement d'hydrocarbures, caractérisé en ce qu'il comprend un moyen de comparaison (15′) des densités de chargement des matériaux soutirés en aval de chacun des réacteurs (1′), des moyens de réglage (16′) du débit d'alimentation de chacun de ces réacteurs (1′) en catalyseur de remplacement, et des moyens de réglage du débit soutiré de chacun de ces réacteurs (1′), lesdits moyens de réglage étant asservis au moyen de comparaison (15′) de façon à maintenir sensiblement égales les densités de chargement mesurées des matériaux soutirés.

8. Dispositif selon la revendication 6, caractérisé en ce qu'il comprend des moyens de matérialisation sous la forme d'un graphique des variations en fonction du temps de la densité de chargement du matériau soutiré du réacteur.

## Claims

1. A process for replacing with a second catalyst a first catalyst in the solid state circulating in a hydrocarbon treatment device comprising at least one treatment reactor (1), in which the catalyst is present in a mobile bed, this process being characterized in that, without interrupting operation of the treatment reactor:
- the first catalyst is drawn off downstream of the or each reactor (1) in the direction of circulation of the catalyst;
- the second catalyst is injected simultaneously upstream of the or each reactor, at an injection speed at most equal to the speed of removal of the first catalyst, introduction of the second catalyst optionally being preceded by the injection of a mass of a third solid body of a different loading weight acting as a marker if the first and second catalysts have substantially equal loading weights;
- the loading weight of the material drawn off downstream of the or each reactor is measured continuously;
- and removal of the first catalyst and injection of the second catalyst are interrupted in the reactor involved when the loading weight thus measured is equal to that of the second catalyst.

2. A process according to claim 1, characterized in that the second catalyst or optionally the third body used exhibits a difference in loading weight from the first catalyst greater than 1%, preferably 2.5 to 25 %.

3. A process according to claim 1, used in a hydrocarbon treatment plant comprising a plurality of reactors (1') in which it is wished to replace simultaneously and in synchronized manner a first catalyst with a second catalyst, characterized in that the loading weights of the materials drawn off simultaneously downstream of each of the reactors (1') are compared and in that the speed at which the second catalyst is fed to each of these reactors and the speed of removal from each of them are controlled in such a way as to keep the measured weights substantially equal.

4. A process according to claim 1, applied to the instance in which the first and second catalysts have substantially equal loading weights, characterized in that the volume of a third injected solid body represents between approximately 1 and 2% by weight of that of the first catalyst.

5. A process according to either one of claims 1 and 2, characterized in that the variations in loading weight of the material drawn off from the reactor (1) in relation to time are defined by a graph.

6. A device for replacing with a second catalyst a first catalyst in the solid state circulating in a hydrocarbon treatment unit comprising at least one reactor (1) in which the catalyst is present in a mobile bed, this device comprising, downstream of the reactor in the direction of circulation of the catalyst, a means (10,11) of drawing off the first catalyst and, upstream of the reactor, a means (12,13) of injecting the second catalyst or a third solid body, this device being characterized in that it comprises a means of measuring the loading weight of the material drawn off by the draw-off means.

7. A device according to claim 6, for the simultaneous, synchronized replacement of a first catalyst by a second catalyst, in a plurality of reactors (1') in one and the same hydrocarbon treatment plant, characterized in that it comprises a means (15') of comparing the loading weights of the materials drawn off downstream of each of the reactors (1'), means (16') of regulating the speed at which each of these reactors (1') is fed with replacement catalyst, and means of regulating the draw-off speed of each of these reactors (1'), said regulating means being controlled by the comparison means (15') in such a way as to keep substantially equal the measured loading weights of the materials drawn off.

8. A device according to claim 6, characterized in that it comprises means of defining in the form of a graph variations in the loading weight of the material drawn off from the reactor in relation to time.

## Patentansprüche

1. Verfahren zum Ersatz eines ersten Katalysators im festen Zustand, welcher in einer Einrichtung zur Behandlung von Kohlenwasserstoffen zirkuliert, die mindestens einen Behandlungsreaktor (1) aufweist, in welchem der Katalysator im Fließbett vorliegt, durch einen zweiten Katalysator, dadurch **gekennzeichnet**, daß ohne Unterbrechung des Betriebes des Behandlungsreaktors
der erste Katalysator in Zirkulationsrichtung des Katalysators gesehen stromabwärts von dem oder jedem Reaktor (1) abgezogen wird,
der zweite Katalysator gleichzeitig stromaufwärts von dem oder jedem Reaktor mit einem volumetrischen Zufuhrdurchsatz zugeführt wird, der höchstens dem volumetrischen Abzugsdurchsatz des ersten Katalysators entspricht, wobei dann, wenn der erste Katalysator und der zweite Katalysator im wesentlichen gleiche Fülldichten aufweisen, der Einführung des zweiten Katalysators die Zufuhr einer Masse eines dritten festen Körpers mit anderer Fülldichte vorangehen kann, welcher als Markierer dient,
die Fülldichte des stromabwärts von dem oder jedem Reaktor abgezogenen Materials kontinuierlich gemessen wird, und
der Abzug des ersten Katalysators und die Zufuhr des zweiten Katalysators vom bzw. zum betreffenden Reaktor unterbrochen werden, sobald die so gemessene Fülldichte derjenigen des zweiten Katalysators entspricht.

2. Verfahren nach Anspruch 1, dadurch **gekennzeichnet**, daß der zweite Katalysator oder gegebenenfalls der verwendete dritte Körper einerseits und der erste Katalysator andererseits eine Fülldichtendifferenz größer als 1 %, vorzugsweise von 2,5 bis 25 %, aufweisen.

3. Verfahren nach Anspruch 1, angewendet auf eine Einrichtung zur Behandlung von Kohlenwasserstoffen mit mehreren Reaktoren (1'), in denen gleichzeitig und auf synchronisierte Art und Weise ein erster Katalysator durch einen zweiten Katalysator ersetzt werden soll, dadurch **gekennzeichnet**, daß die Fülldichten der gleichzeitig stromabwärts von jedem der Reaktoren (1') abgezogenen Materialien verglichen werden und daß der Speisungsdurchsatz jedes dieser Reaktoren an zweitem Katalysator und der Abzugsdurchsatz jedes von ihnen so gesteuert werden, daß die gemessenen Dichten im wesentlichen gleich bleiben.

4. Verfahren nach Anspruch 1, angewendet auf den Fall, daß der erste Katalysator und der zweite Katalysator im wesentlichen gleiche Fülldichten aufweisen, dadurch **gekennzeichnet**, daß die Menge von zugeführtem dritten festen Körper zwischen etwa 1 und 2 Gewichtsprozent derjenigen des ersten Katalysators ausmacht.

5. Verfahren nach Anspruch 1 oder 2, dadurch **gekennzeichnet**, daß die zeitlichen Änderungen der Fülldichte des vom Reaktor (1) abgezogenen Materials durch eine graphische Darstellung materialisiert werden.

6. Einrichtung zum Ersatz eines ersten Katalysators im festen Zustand, welcher in einer Einheit zur Behandlung von Kohlenwasserstoffen zirkuliert, die mindestens einen Reaktor (1) aufweist, in welchem der Katalysator im Fließbett vorliegt, durch einen zweiten Katalysator, wobei die Einrichtung in Zirkulationsrichtung des Katalysators gesehen stromabwärts vom Reaktor ein Mittel (10,11) zum Abzug des ersten Katalysators und stromaufwärts vom Reaktor ein Mittel (12,13) zur Zufuhr des zweiten Katalysators oder eines dritten festen Körpers aufweist, dadurch **gekennzeichnet**, daß ein Mittel zur Messung der Fülldichte des durch das Abzugsmittel abgezogenen Materials vorgesehen ist.

7. Einrichtung nach Anspruch 6 zum gleichzeitigen und synchronisierten Ersatz eines ersten Katalysators durch einen zweiten Katalysator in mehreren Reaktoren (1') ein und derselben Anlage zur Behandlung von Kohlenwasserstoffen, **gekennzeichnet** durch ein Mittel (15') zum Vergleichen der Fülldichten der stromabwärts von jedem der Reaktoren (1') abgezogenen Materialien, Mittel (16') zum Steuern des Speisungsdurchsatzes jedes dieser Reaktoren (1') an Ersatzkatalysator und Mittel zum Steuern des Abzugsdurchsatzes jedes dieser Reaktoren (1'), wobei die Steuermittel ihrerseits vom Vergleichsmittel (15') so gesteuert werden, daß die gemessenen Fülldichten der abgezogenen Materialien im wesentlichen gleich bleiben.

8. Einrichtung nach Anspruch 6, dadurch **gekennzeichnet**, daß Mittel zur Materialisation der zeitlichen Änderungen der Fülldichte des vom Reaktor abgezogenen Materials in Form einer graphischen Darstellung vorgesehen sind.
